(19) **Europäisches Patentamt / European Patent Office / Office européen des brevets**

(11) **EP 3 236 150 A2**

(12) **EUROPEAN PATENT APPLICATION**
published in accordance with Art. 153(4) EPC

(43) Date of publication:
25.10.2017 Bulletin 2017/43

(51) Int Cl.:
*F22B 1/02* (2006.01)    *F28D 7/00* (2006.01)

(21) Application number: 15868379.7

(86) International application number:
PCT/RU2015/000785

(22) Date of filing: 09.12.2015

(87) International publication number:
WO 2016/093736 (16.06.2016 Gazette 2016/24)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.12.2014 RU 2014150427**

(71) Applicant: **Aktsyonernoe Obshchestvo "Ordena Trudovogo Krasnogo Znameni i Ordena Truda CHSSR Opytnoe Konstructorskoe Byuro "Gidropress" d. Podolsk, Moskovskaya obl. 142102 (RU)**

(72) Inventors:
• **LACHOV, Dmitriy Aleksandrovich g. Podolsk Moskovskaya obl. 142100 (RU)**
• **SAFRONOV, Aleksey Vladimirovich g. Podolsk Moskovskaya obl. 142100 (RU)**

(74) Representative: **Friese Goeden Patentanwälte PartGmbB Widenmayerstraße 49 80538 München (DE)**

(54) **HORIZONTAL STEAM GENERATOR FOR A REACTOR PLANT**

(57)    This invention relates to electric power industry, and more particularly to horizontal steam generators for nuclear power plants with a water-cooled water-moderated power reactor (VVER) and to reactor plants with a VVER reactor and a horizontal steam generator.

A reactor plant with a VVER reactor and a horizontal seam generator, including a nuclear reactor with four circulation loops, each comprising a steam generator with a horizontal bundle of heat-exchange tubes divided into banks by means of intertubular tunnels and connected to primary circuit coolant headers inside a cylindrical pressure vessel with elliptical bottoms, a reactor coolant pump, and a primary circuit coolant main circulation pipeline. Pressure vessel bore $D_{vess}$, distance S between the centerlines of the primary circuit coolant headers in the transverse direction and steam generator length $L_v$ along the inner surfaces of the elliptical bottoms have been respectively selected based on the following ratios:

$$0.148 \cdot D + 0.637 \cdot \sqrt{0.054 \cdot D^2 + 3.142 \cdot \frac{N_{tb} \cdot S_h \cdot S_v}{k}} \leq D_{vess} \leq 1.827 \cdot H, \qquad\qquad 0.4 \leq \frac{S}{D_{vess}} \leq 0.6 ,$$

$$L_к = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

where: D is the rated steam generator capacity, t/h, $N_{tb}$ is the number of steam generator vessel heat-exchange tubes, pcs., Sv, Sh is the spacing between heat-exchange tubes in vertical and horizontal rows of heat-exchange bundle, respectively, mm, k is the arrangement identifier of heat-exchange tube bundle in a bank, H is the steam generator vessel tube filling height, mm, $D_{head}$ is the primary circuit header outer diameter in the drilled area, mm, $\alpha$ is the heat-exchange tube central bend angle, deg., $B_1$ и $B_2$ are the width of the heat-exchange tube central tunnel and the width of the heat-exchange tube tunnel opposite to the coolant header, respectively, mm, $S_{head}$ is the heat-exchange tube

**EP 3 236 150 A2**

circumferential spacing on the outer surface of the coolant header, mm, $H_{hes}$ is the steam generator heat-exchange surface area, $m^2$, d is the outer heat-exchange tube diameter, mm, $\Delta$ is the distance from the outer heat-exchange bundle tube to the steam generator bottom inner surface along the longitudinal steam generator axis, mm, wherein heat-exchange tube bend angle $\alpha$ and distance $\Delta$ have been selected from the following ranges: $90° \leq \alpha \leq 150°$ and $300$ mm $\leq \Delta \leq 1000$ mm.

Fig. 1

**Description**

This invention relates to electric power industry, and more particularly to horizontal steam generators for nuclear power plants with a water-cooled water-moderated power reactor (VVER) and to reactor plants with a VVER reactor and a horizontal steam generator.

A steam generator is the most important element of the reactor plant (RP) primary circuit of VVER nuclear power plants (NPP). Steam is generated in it due to the heat produced in the reactor, the steam is used as the turbine working medium for power generation. In addition to steam generation, steam generators must ensure reliable and continuous cooling of the reactor core in all NPP operation modes.

During steam generator operation, highly radioactive primary circuit coolant is pumped through it. For this reason, NPP steam generators are installed inside the reactor building containment and the containment dimensions are greatly influenced by the steam generator dimensions.

Since the development of reactor plants for nuclear power plants with water-cooled water-moderated power reactors (VVER), two approaches to steam generator design have been developed: vertical and horizontal steam generators. In the first case, a steam generator has a vertical pressure vessel and vertical U-shaped heat-exchange tubes embedded in a horizontal tube sheet. In the second case, a steam generator has a horizontal pressure vessel and horizontal heat-exchange tubes embedded in vertical inlet and outlet headers of the primary circuit coolant. Currently, the both design concepts have evolved into well-established but different technological trends. The claimed invention relates to the horizontal steam generator concept, to its application in reactor plants in combination with VVER type reactors.

According to the background of the invention, there are different designs of horizontal steam generators with varying reliability, dimensions, capacity, component density of heat-exchange tube bundles, arrangement of internals, specific amount of metal per structure, etc.

The steam generator disclosed in International Application WO9320386 issued on 10/14/1993, IPC F22B1/02, has a horizontal pressure vessel and a horizontal heat-exchange tube bundle installed in the same, the tubes are embedded in vertical inlet and outlet headers of the primary circuit coolant. A feed water supply device is located in the center of the heat-exchange tube bundle, which results in a significant horizontal break in the steam generator vessel filling with the heat-exchange surface. Low power, increased specific amount of metal per structure and lower durability of the reactor plant steam generator are the consequences of insufficient steam generator pressure vessel filling with heat-exchange tubes.

A horizontal steam generator is disclosed in Russian Utility Model Patent No. 100590 issued on 12/20/2010, IPC: F22B37/00. The horizontal steam generator comprises a vessel with an elliptical bottom welded to each end of the same, the bottom comprises a ferrule with a flat lid with, according to the claimed utility model, the ratio between the average ferrule height and ferrule bore is between 0.1 and 0.9. This technical solution is designed to reduce steam generator dimensions for facilitating its delivery from the manufacturing plant to its place of assembly and increasing the free space in the steam generator box. The longitudinal dimension is reduced due to a shorter ferrule, but not a change in the steam generator pressure vessel length, i.e. the device does not reduce specific amount of metal per structure.

Foreign counterparts of VVER reactors manufactured in Russia are PWR type reactors (pressurized water reactor). Reactor plants with PWR type reactors are usually equipped with vertical steam generators.

Unlike the above steam generators with a vertical pressure vessel, horizontal steam generators have the following known peculiar aspects resulting from their design:

- moderate steam load allows to apply a simple separation scheme while reliably ensuring the required water content of steam,
- moderate medium flow rate in the secondary circuit eliminates the vibration hazard in the heat-exchange tubes and other elements of the steam generator,
- the vertical cylindrical inlet and outlet headers of the primary circuit prevents accumulation of sludge deposits on their surfaces and thus reducing the hazard of corrosive damage of heat-exchange tubes in areas of their insertion in the said headers,
- increased supply of water in the secondary circuit increases reliability of reactor cooldown through the steam generator in case the emergency feed water system is used, and the accumulating capacity of such steam generator mitigates reactor plant transient modes,
- the horizontal position of the heat-exchange surface provides reliable natural medium circulation in the primary circuit even when the water level is below the upper rows of heat-exchange tubes,
- favorable conditions for primary circuit coolant natural circulation in emergency conditions are provided,
- convenient access to the heat-exchange tube bundle is provided for maintenance and control both from the primary and secondary circuit sides. There are no heat-exchange tubes in the lower steam generator pressure vessel, where sludge may be deposited and accumulate, therefore, in case of accumulation of corrosive impurities in the lower part of the steam generator pressure vessel, sludge can be flushed through the blowdown system and nozzles.

According to the background of the invention, there are inventions relating to the nuclear industry, including development of horizontal steam generators based on vertical steam generator engineering experience. For instance, US Patent US5331677 issued on 7/19/1994, IPC: F22B37/00 discloses a reactor plant equipped with a pressurized water reactor that includes a reactor, a coolant pump with an inlet connected to an outlet of the reactor vessel, a steam generator with an inlet connected to a high-temperature pipeline at the outlet of the said pump and an outlet of a low-temperature pipeline connected to an inlet of the reactor vessel. The steam generator has a horizontally extended vessel with a horizontal U-shaped heat-exchange tube bundle inside. The heat-exchange tubes are inserted in a vertical tube sheet. Application of a tube sheet in a horizontal steam generator design has disadvantages due to high specific amount of metal per structure, manufacturing complexity, complexity of provision of leaktightness of the heat-exchange tube connection to the tube sheet. Application of a tube sheet does not allow to install a large number of tubes in such steam generator, as a result, they are quite long. The design of the above steam generator is approximately the same as the vertical steam generator design that is positioned horizontally in the reactor plant. A special aspect of the reactor plant is a small number of tubes in its steam generators resulting from the fact that one tube sheet is installed in the distribution chamber, i.e. the entire heat-exchange surface is formed by single U-shaped tube loop. As a result, heat-exchange tubes are long and their side walls are thin. This reduces the operation reliability of the reactor plant as its steam generators have a lower heat-exchange tube plugging margin and a higher hydraulic resistance of the heat-exchange tubes on the primary circuit side, which has an adverse effect on accident propagation.

Radial arrangement of steam generators is another reactor plant disadvantage resulting in increased reactor building dimensions. This increases the complexity of the containment and capital construction scope.

In terms of reliability and cost effectiveness, VVER-1000 reactors are well-proven at the existing nuclear power plants in Russia and abroad. Naturally, reactor plant assemblies and parts that require improvement are identified periodically in the course of operation.

Thus, Russian Utility Model Patent No. 143541 issued on 7/27/2014, IPC: G21C1/03 discloses a VVER-1000 reactor plant (RP) with four primary circuit coolant circulation loops, each containing a PGV-1000 steam generator and reactor coolant pump (RCP). The RP primary circuit coolant circulation loop consists of two parts. The first part is a hot circulation pipeline connecting the RP and the steam generator, and the second part is a cold circulation pipeline used to pump the primary circuit coolant from the steam generator to the reactor with the RCP. The function of each RP circulation loop is unconstrained transfer of the primary circuit coolant through the steam generator and RCP from and to the reactor. The main function of the steam generator is generation of dry saturated steam due to heat transferred to the steam generator from the nuclear reactor core by the primary circuit coolant. The RP, steam generator and RCP are interconnected by means of a welded pipeline with an inner diameter of 850 mm (DN850). The RP is connected to the steam generator by the main circulation pipeline with a vertical pipe bend with a radius of 1340 mm. Thermal expansion and vibration of all primary circuit systems occurs under the primary circuit water head. High temperatures and pressure of the coolant affect pipeline bends and welded connections, which may lead to their damage to the extent of cracking. In particular, the utility model is designed to prevent a damage to weld No. 111 on the circulation pipeline.

To solve the above problem, this utility model proposes connecting the steam generator hot header and the hot circulation pipeline via a small header such that the length of the hot circulation pipeline from the lower end of the small header to the hot circulation pipeline bend does not exceed 0.25 m and the length of the cold circulation pipeline is designed to match the hot circulation pipeline length.

Increased complexity of steam generator design and manufacture is the disadvantage of this utility model. It is suggested that an additional small header is welded to the main outlet header by means of an extra welded connection, as it may not be repaired, the operation reliability of the steam generator and the reactor plant is decreased.

The purpose of the claimed invention is to improve the performance of the reactor plant due to an increased number of heat-exchange tubes in the steam generator pressure vessel without a significant increase in its dimensions, with its possible installation in the reactor building boxes with no increase in the capital construction scope.

In addition, the steam generator heat-exchange tube number is important for increasing the steam generator power to improve steam parameters, in particular, pressure, which in its turn allows to improve the reactor plant efficiency. Increase in the number of heat-exchange tubes in the steam generator pressure vessel also improves its durability, as in the event of a failure of one or more tubes they may be plugged an the device operation may be continued due to availability of additional heat-exchange tubes. When the number of heat-exchange tubes in the steam generator pressure vessel functioning as part of a reactor plant is increased, the latter is cooled down more efficiently, i.e. the critical heat flux ratio in the reactor core increases. Increase in the number of heat-exchange tubes in the steam generator pressure vessel also reduces the specific amount of metal per structure of the vessel as the device capacity is increased in a smaller vessel.

The technical result of the claimed invention application consists in the increased heat transfer rate, reliability and durability of the steam generator due an increased number of heat-exchange tubes installed in the vessel with of serviceability and ease of manufacturing of U-shaped tubes, and reduced specific amount of metal per structure of the steam generator pressure vessel provided at the same time.

The technical result of the claimed invention application also includes increased reliability, durability and efficiency of the reactor plant, reduced specific amount of metal per structure of the reactor plant steam generators, and their ease of manufacturing.

To solve the problem at hand, we claim a horizontal steam generator for a reactor plant with a water-cooled water-moderated power reactor comprising a cylindrical pressure vessel equipped at least with one feed water supply connection pipe and one steam removal connection pipe, and two elliptical bottoms, internals, primary circuit coolant inlet and outlet headers connected to a heat-exchange tube bundle forming a steam-generator heat-exchange surface, the heat-exchange tube bundle being divided into banks by intertubular tunnels, wherein distance S between the primary circuit coolant header centerlines in the transverse direction of the steam generator pressure vessel has been selected based on the following ratio: $0.4 \leq \dfrac{S}{D_{\text{vess}}} \leq 0.6$ , where $D_{\text{vess}}$ is the steam generator pressure vessel inner diameter, and steam generator length $L_v$ along the inner surfaces of the elliptical bottoms has been selected based on the following ratio:

$$L_{\text{к}} = D_{\text{vess}} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{\text{head}}}{4 \cdot S_{\text{head}}} - 1 \right) \cdot S_{\text{h}} \right) + \left( \frac{\pi \cdot D_{\text{head}}}{4 \cdot S_{\text{head}}} - 1 \right) \cdot S_{\text{h}} \cdot \frac{1}{\sin\left(\frac{\alpha}{2}\right)} + \Delta \right] + \frac{H_{\text{hes}} \cdot 10^6}{\pi \cdot d \cdot N_{\text{tb}}} ,$$

where: $D_{\text{head}}$ is the coolant header outer diameter in the drilled part, mm,
$\alpha$ is the heat-exchange tube central bend angle, deg.,
$B_1$ is the width of the heat-exchange tube central intertubular tunnel, mm,
$B_2$ is the width of the heat-exchange tube intertubular tunnel opposite to the coolant header, mm,
$S_{\text{head}}$ is the heat-exchange tube circumferential spacing on the outer surface of the coolant header, mm,
Sh is the spacing between heat-exchange tubes in the horizontal heat-exchange bundle row, mm,
$H_{\text{hes}}$ is the steam generator heat-exchange surface area, m$^2$,
$N_{\text{tb}}$ is the number of steam generator heat-exchange tubes, pcs.,
d is the outer heat-exchange tube diameter, mm,
$\Delta$ is the distance from the outer heat-exchange bundle tube to the steam generator bottom inner surface along the longitudinal steam generator axis, wherein central heat-exchange tube bend angle $\alpha$ and distance $\Delta$ have been selected from the following ranges: $90° \leq \alpha \leq 150°$ and $300 \leq \Delta \leq 1000$ mm

Possibility to install the maximum number of heat-exchange tubes in the steam generator while ensuring serviceability, reliability and heat transfer efficiency depends on selection of the S distance between the centerlines of the primary circuit coolant headers in the transverse direction of the steam generator pressure vessel from the above empirical relation.

The reactor plant layout in the reactor building depends on selection of the $L_v$ length as four large steam generators are difficult to install within the limited containment space. In addition, steam generator pressure vessel length $L_v$ selected according to the claimed invention guarantees ease of manufacturing of U-shaped tubes of the heat-exchange bundle making up the heat-exchange surface of the steam generator, which is essential for reactor plant integrity ad reliable operation.

According to the claimed invention, the steam generator heat-exchange tubes bundle is filled with heat-exchange tubes from bottom upwards continuously with vertical gaps between adjacent tubes not exceeding the vertical spacing of tubes in the bundle. The bundle is divided into banks by means of intertubular tunnels. The vertical intertubular tunnel width is between 100 mm and 250 mm. Horizontal heat-exchange tubes are inserted in holes in vertical headers of the primary circuit coolant. At the point of connection to the coolant header, the heat-exchange tube bend shall have a radius of at least 60 mm and, preferably, at least 100 mm. To meet the coolant header side wall strength requirement, its drilling area on the outer surface shall exceed the area of holes drilled in it for heat-exchange tube connection by at least 20 %.

In addition, the steam generator may include at least the following internals: a feed water supply and distribution device located above the heat-exchange tube bundle, an emergency feed water supply and distribution device located in the steam space, device for chemical reagent supply during steam generator flushing, a submerged perforated sheet and an overhead perforated sheet.

The second object of the claimed invention is a reactor plant with a water-cooled water-moderated power reactor and a horizontal seam generator, including a nuclear reactor with four circulation loops, each comprising a steam generator with a horizontal bundle of heat-exchange tubes divided into banks by means of intertubular tunnels and connected to primary circuit coolant headers inside a cylindrical pressure vessel with elliptical bottoms, a reactor coolant pump, and a primary circuit coolant main circulation pipeline, wherein pressure vessel bore $D_{vess}$, distance S between the centerlines of the primary circuit coolant headers in the transverse direction and steam generator length $L_v$ along the inner surfaces of the elliptical bottoms have been respectively selected based on the following ratios:

$$0.148 \cdot D + 0.637 \cdot \sqrt{0.054 \cdot D^2 + 3.142 \cdot \frac{N_{tb} \cdot S_h \cdot S_v}{k}} \leq D_{vess} \leq 1.827 \cdot H,$$

$$0.4 \leq \frac{S}{D_{vess}} \leq 0.6 \,,$$

$$L_{\kappa} = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

where: D is the rated steam generator capacity, t/h,

$N_{tb}$ is the number of steam generator vessel heat-exchange tubes, pcs.,

Sv, Sh is the spacing between heat-exchange tubes in vertical and horizontal rows of heat-exchange bundle, respectively, mm,

k is the arrangement identifier of heat-exchange tube bundle in a bank (k=1 for in-line arrangement and k=2 for staggered arrangement),

H is the steam generator vessel tube filling height, mm,

$D_{head}$ is the primary circuit header outer diameter in the drilled area, mm,

$\alpha$ is the heat-exchange tube central bend angle, deg.,

$B_1$ is the width of the heat-exchange tube central tunnel, mm,

$B_2$ is the width of the heat-exchange tube tunnel opposite to the coolant header, mm,

$S_{head}$ is the heat-exchange tube circumferential spacing on the outer surface of the coolant header, mm,

$H_{hes}$ is the steam generator heat-exchange surface area, $m^2$,

d is the outer heat-exchange tube diameter, mm,

$\Delta$ is the distance from the outer heat-exchange bundle tube to the steam generator bottom inner surface along the longitudinal steam generator axis, wherein heat-exchange tube bend angle $\alpha$ and distance $\Delta$ have been selected from the following ranges:

$$90^{\circ} \leq \alpha \leq 150^{\circ} \quad and \quad 300 \text{ mm} \leq \Delta \leq 1000 \text{ mm}.$$

To improve the seismic stability, the steam generator and reactor coolant pump may be attached to the reactor building walls by means of hydraulic snubbers.

To increase the cavitation margin by working chamber temperature reduction, the reactor coolant pump may be installed downstream the steam generator along the primary circuit coolant flow in the circulation loop.

To improve the reactor plant operation reliability, two reactor coolant pumps may be installed in each loop. That is, a reactor coolant pump may be installed on both the hot and cold legs of the main circulation pipeline in a circulation loop. Reliability is increased by means of possibility of pump redundancy.

In another arrangement of the reactor plant, two reactor coolant pumps of lower capacity may be installed in parallel on the cold leg of the main circulation pipeline. This will allow to reduce the pump dimensions, increasing the reliability margin and improving reactor plant technical and economic performance.

In addition, provision may be made for gate valves on the main circulation pipeline legs of the reactor plant. This would allow to enhance the operation reliability of the reactor plant making it possible to isolate the steam generator from the reactor and perform repairs without shutting down the reactor plant.

The invention is illustrated by the following figures.

Fig. 1 shows a horizontal section of the containment with a reactor plant installed in it.

Fig. 2 shows a horizontal section of the steam generator pressure vessel.

Fig. 3 shows a horizontal section detail of the steam generator pressure vessel at the point of heat-exchange tube connection to the primary circuit coolant header.

**EP 3 236 150 A2**

Fig. 4 shows a cross-section of the steam generator along the centerline of the primary circuit coolant inlet header.
Fig. 5 shows the heat-exchange tube staggered arrangement.
Fig. 6 shows the heat-exchange tube in-line arrangement.
Fig. 7 shows a reactor plant (RP) primary circuit coolant circulation loop with a reactor coolant pump (RCP) installed on the cold leg of the main circulation pipeline (MCP).
Fig. 8 shows an RP primary circuit coolant circulation loop with an RCP installed on the MCP cold leg and hot leg.
Fig. 9 shows an RP primary circuit coolant circulation loop with two RCPs installed on the MCP cold leg.
Fig. 10 shows an RP primary circuit coolant circulation loop with gate valves installed on the MCP cold leg and hot leg.

The reactor plant equipment, including steam generators, and its safety systems shall be installed in the NPP reactor compartment. The reactor compartment consists of a pressurized part and unpressurized part. The primary circuit equipment and the reactor are typically installed in the pressurized part.

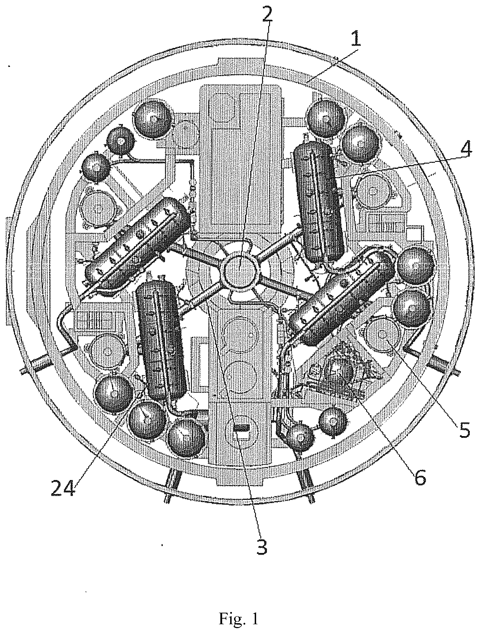

Fig. 1 shows a horizontal section of containment 1 with a reactor plant installed in it. The containment is designed as a cylinder of prestressed reinforced concrete, its thickness, for instance, for the VVER-1000 project, is 1.2 m, its inner diameter is 45 m and height is 52 m.

A reactor 2 connected to steam generators 4 by means of a main circulation pipeline (MCP) 3 is located in the central part of the containment 1. Reactor coolant pumps (RCP) 5 are used to pump the primary circuit coolant (pressurized water) from the steam generators 4 to the reactor 2 and back through the MCP. To maintain the pressure and compensate for coolant volume variation during its heating or cooling, pressurizers 6 are additionally applied in the reactor plant. As is shown in Figure 1, the steam generators 4 occupy a larger area than any other reactor plant equipment in the containment. However, society development requires increased power generation and increased reactor plant power from NPPs and, therefore, increased an heat-exchange surface and dimensions of steam generators, which can hardly be fit in reactor building boxes already at this moment. Further increase of the area and size of containments is uneconomical due to significant increase of the scope and costs of NPP capital construction.

The claimed invention allows to increase heat transfer intensity, reliably and durability of a steam generator by increasing the number of heat-exchange tubes in its pressure vessel, which allows to improve performance of the reactor plant without any considerable increase in dimensions, making it possible to fit steam generators in containment boxes of the specified size.

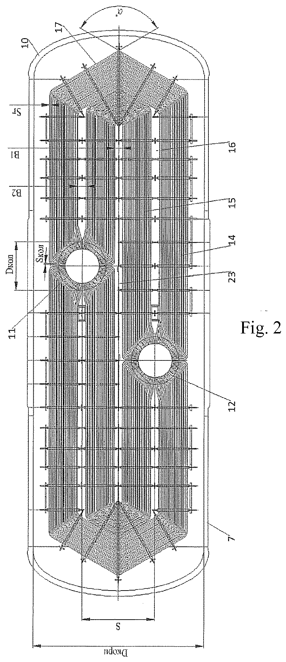

The claimed horizontal steam generator 4 for a reactor plant with a VVER reactor comprises a cylindrical vessel 7 equipped with at least a feed water supply connection pipe 8 and a steam removal connection pipe 9, two elliptical bottoms 10, internals, an inlet header 11 and an outlet header 12 of the primary circuit coolant connected to a heat-exchange tube bundle 13 making up a heat-exchange surface of the steam generator, wherein the heat-exchange tube bundle is divided into banks 14 and 15 by means of intertubular tunnels 16. To solve the task at hand, distance S (Fig. 2) between the centerlines of the headers 11 and 12 of the primary circuit coolant in the transverse direction of the steam generator pressure vessel 7 has been selected based on the following ratio: $0.4 \leq \frac{S}{D_{vess}} \leq 0.6$ , where $D_{vess}$ is the steam generator pressure vessel inner diameter, and steam generator length $L_v$ measured along the inner surfaces of the elliptical bottoms has been selected based on the following ratio:

$$L_к = D_{head} + 2\cdot\left[\left(ctg\left(\frac{\alpha}{2}\right) - \frac{1}{\sin\left(\frac{\alpha}{2}\right)}\right)\cdot\left(\frac{B_1}{2} + B_2 + \left(\frac{\pi\cdot D_{head}}{4\cdot S_{head}} - 1\right)\cdot S_h\right) + \left(\frac{\pi\cdot D_{head}}{4\cdot S_{head}} - 1\right)\cdot S_h\cdot\frac{1}{\sin\left(\frac{\alpha}{2}\right)} + \Delta\right] + \frac{H_{hes}\cdot 10^6}{\pi\cdot d\cdot N_{tb}},$$

where: $D_{head}$ is the coolant header outer diameter in the drilled part, mm,
$\alpha$ is the heat-exchange tube central bend angle, deg.,
$B_1$ is the width of the heat-exchange tube central intertubular tunnel, mm,
$B_2$ is the width of the heat-exchange tube intertubular tunnel opposite to the coolant header, mm,
$S_{head}$ is the heat-exchange tube circumferential spacing on the outer surface of the coolant header, mm. The above spacing is measured as a distance from the center of one heat-exchange tube to the center of its adjacent heat-exchange tube in a horizontal row on the outer surface of the coolant header.

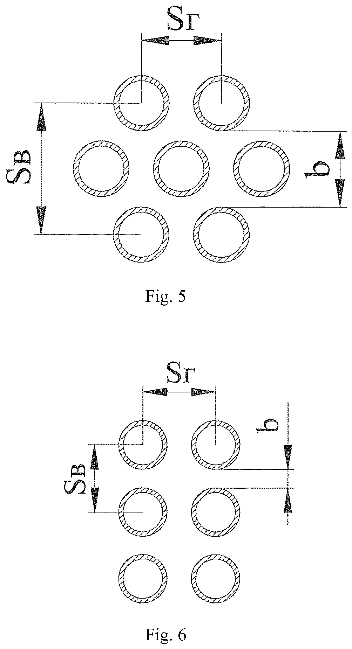

Sh is the spacing between heat-exchange tubes in the horizontal heat-exchange bundle row, mm. The above spacing is measured as a distance from the center of one heat-exchange tube to the center of its adjacent heat-exchange tube in a horizontal row on the outer surface of the coolant header as is shown in Fig. 5 and 6.
$H_{hes}$ is the steam generator heat-exchange surface area, $m^2$. The steam generator heat-exchange surface area is measured as a sum total of surface areas of the heat-exchange bundle tubes.
$N_{tb}$ is the number of steam generator heat-exchange tubes, pcs.

d is the outer heat-exchange tube diameter, mm.

$\Delta$ is the distance from the outer heat-exchange bundle tube 17 to the steam generator bottom 10 inner surface along the longitudinal steam generator axis, in mm, wherein central heat-exchange tube bend angle $\alpha$ and distance $\Delta$ have been selected from the following ranges:

$$90^{\circ} \leq \alpha \leq 150^{\circ} \quad \text{and} \quad 300 \leq \Delta \leq 1000 \text{ mm.}$$

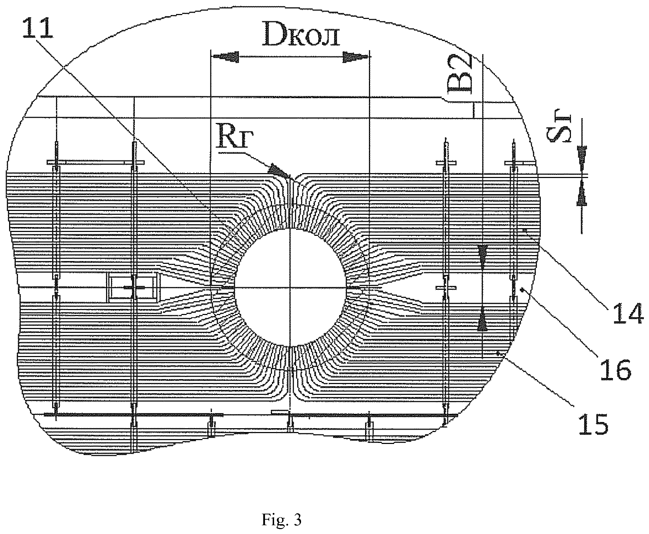

According to the claimed invention, the steam generator heat-exchange tubes bundle 13 is filled with heat-exchange tubes from bottom upwards continuously with vertical gaps b between adjacent tubes not exceeding the vertical spacing of tubes in the bundle, as is shown in Fig. 5 and 6. Horizontal heat-exchange tubes are inserted in holes in vertical headers 11 and 12 of the primary circuit coolant. As is shown in Fig. 3, at the point of connection to the coolant header, the heat-exchange tube bend shall have radius Rh of at least 60 mm and, preferably, at least 100 mm.

The steam generator may include at least the following internals: a feed water supply and distribution device 18 located above the heat-exchange tube bundle 13, an emergency feed water supply and distribution device 19 located in the steam space, device 20 for chemical reagent supply during steam generator flushing, a submerged perforated sheet 21 and an overhead perforated sheet 22.

During steam generator 4 operation, the primary circuit coolant is supplied from the reactor 2 to the steam generator inlet header 11, distributed among the heat-exchange bundle 13 tubes and flows through the same to the outlet header 12 transferring its heat to the boiler water, i.e. the secondary circuit coolant (medium) through the heat-exchange surface wall. Feed water is supplied to the steam generator through the connection pipe 8 and the feed water supply and distribution device 18 connected to the same, making up the boiler water in the steam generator, and is heated up by mixing with the steam-water mixture in it. Water heated up to saturation is drawn into the steam generator circulation circuit (secondary circuit). The secondary circuit coolant boils on the steam generator heat-exchange surface and moves up the circulation circuit riser sections. To separate water from steam in the steam generator, a single-stage gravitation settling separation is applied. Steam is removed from the steam generator through steam tubes 9 in the upper part of the vessel 7.

Steam leaving the heat-exchange bundle 13 is compensated for by means of water downward motion in the intertubular tunnels 16, 23 along the tube bank length, and in the gap between the steam generator vessel and tube bundle.

The empirical formula ratio proposed for calculation of the steam generator length Lv is based on the process requirements for the heat-exchange surface tube bend near the steam generator bottoms. The heat-exchange bundle tubes shall be U-shaped in three bends. The angle of the central bend is between 90° and 150°, and the distance between the heat-exchange bundle outer tube and the inner bottom surface between 300 mm and 1000 mm, which is essential in terms of the process and technical and economic considerations. The preferable heat-exchange tube central bend angle is 120°.

The formula $0.4 \leq S/D_{vess} \leq 0.6$ describes a steam generator design with heat-exchange tube banks of almost the same width. Provided that heat-exchange tube banks are equal in width, when $S/D_{vess} = 0.5$, the largest number of heat-exchange tubes can be fit in the steam generator, other things being equal, which reduces steam generator pressure vessel specific amount of metal per structure.

A steam generator may be assembled with a distance between the headers in the transverse direction outside the specified range, but the number of tubes in such steam generator will be less than required for its efficient operation due to the fact that the inner space of the vessel is not effectively used. Namely, if distance S between the centerlines of the coolant headers in the transverse direction is $S \leq 0.4 \cdot Dvess$, a considerable space in the central part of the steam generator adjacent to the longitudinal section plane in the heat-exchange bundle area will remain unfilled with heat-exchange tubes due to the reason described below. To insert heat-exchange tubes in the coolant header holes, they shall have specified bend radius Rh (Fig. 3), and the length of a straight section at the end shall exceed the depth of a hole in the header wall the tube is inserted in. In addition, heat-exchange tube bend radii shall be at least 60 mm, and preferably at least 100 mm to be inserted in the header holes.

If distance S between the centerlines of the coolant headers in the transverse direction is $S \geq 0.6 \cdot D_{vess}$, a considerable space in the peripheral part of the steam generator adjacent to the vessel side walls in the area of the heat-exchange bundle will remain unfilled with heat-exchange tubes for the above reason, as to insert heat-exchange tubes in the coolant header holes they shall have the specified bend radius, and the length of a straight section at the end shall exceed the depth of the hole in the header wall the tube is inserted in.

Manufacture of a steam generator with its vessel inner diameter $D_{vess}$, distance S between the centerlines of the coolant headers in the transverse direction and length Lv (along the inner surfaces of the elliptical bottoms) selected allows to fit the largest number of heat-exchange tubes in the steam generator pressure vessel of the selected size providing their secure mounting, while obtaining steam with the required water content in the vessel of the minimum diameter, and meeting the requirements to the ease of manufacturing of U-shaped heat-exchange tubes. Steam generator dimensions $D_{vess}$ are Lv are considering its installation as part of a reactor plant in containment boxes.

The reactor plant comprising the claimed steam generator is shown in Fig. 1. It comprises a nuclear reactor 2 with four circulation loops, each comprising a steam generator 4 with a horizontal bundle 13 of heat-exchange tubes divided into banks 14 and 15 by intertubular tunnels 16 and connected to primary circuit coolant headers 11 and 12 inside a cylindrical vessel 7 with elliptical bottoms 10, a reactor coolant pump 5, and a main circulation pipeline 3 of the primary circuit coolant, wherein vessel 7 inner diameter $D_{vess}$, distance S between the centerlines of the primary circuit coolant headers 11 and 12 in the transverse direction, and steam generator length Lv along the inner surfaces of the elliptical bottoms 10 are selected, respectively, by the following ratios:

$$0.148 \cdot D + 0.637 \cdot \sqrt{0.054 \cdot D^2 + 3.142 \cdot \frac{N_{tb} \cdot S_h \cdot S_v}{k}} \leq D_{vess} \leq 1.827 \cdot H,$$

$$0.4 \leq \frac{S}{D_{vess}} \leq 0.6,$$

$$L_{\text{к}} = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

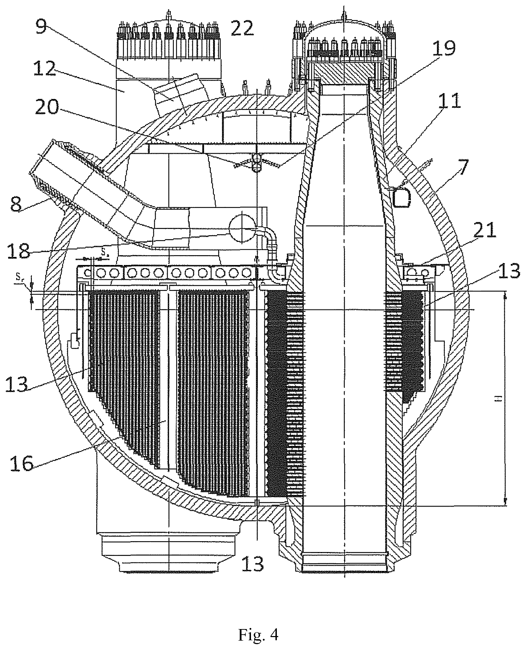

where: D is the rated steam generator capacity, t/h,
$N_{tb}$ is the number of steam generator vessel heat-exchange tubes, pcs.,
Sv, Sh is the spacing between heat-exchange tubes in vertical and horizontal rows of heat-exchange bundle, respectively, mm, as is shown in Fig. 5 and 6,
k is the arrangement identifier of heat-exchange tube bundle in a bank (k=1 for in-line arrangement and k=2 for staggered arrangement),
H is the steam generator vessel tube filling height, mm, as is shown in Fig. 4,
$D_{head}$ is the primary circuit header outer diameter in the drilled area, mm,
$\alpha$ is the heat-exchange tube central bend angle, deg.,
$B_1$ is the width of the heat-exchange tube central tunnel, mm,
$B_2$ is the width of the heat-exchange tube tunnel opposite to the coolant header, mm,
$S_{head}$ is the heat-exchange tube circumferential spacing on the outer surface of the coolant header, mm,
$H_{hes}$ is the steam generator heat-exchange surface area, m$^2$,
d is the outer heat-exchange tube diameter, mm,
$\Delta$ is the distance from the outer heat-exchange bundle tube to the steam generator bottom inner surface along the longitudinal steam generator axis, wherein heat-exchange tube bend angle $\alpha$ and distance $\Delta$ have been selected from the following ranges:

$$90° \leq \alpha \leq 150° \quad \text{and} \quad 300 \text{ mm} \leq \Delta \leq 1000 \text{ mm}.$$

To improve the seismic stability, the steam generator and reactor coolant pump may be attached to the reactor building walls by means of hydraulic snubbers 24.

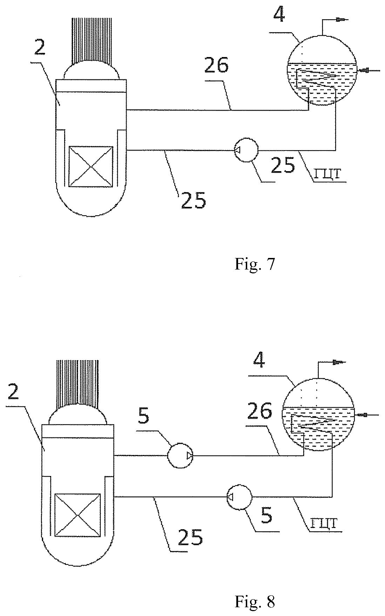

Figures 7-9 show arrangement options of the proposed reactor plant as exemplified by one of the four circulation loops, with the MCP cold leg designated as item 25 and the hot leg as 26.

To increase the cavitation margin by working chamber coolant temperature reduction, as shown in Fig. 7, the reactor plant 2 coolant pump 5 may be installed downstream the steam generator 4 along the primary circuit coolant flow in the circulation loop on the MCP 3 cold leg 25.

In the other option shown in Fig. 8, to improve the reactor plant operation reliability, two reactor coolant pumps 5 may be installed in each circulation loop. That is, a reactor coolant pump 5 may be installed on both the hot leg 26 and cold leg 25 of the main circulation pipeline in a circulation loop. Reliability is increased by means of possibility of pump redundancy.

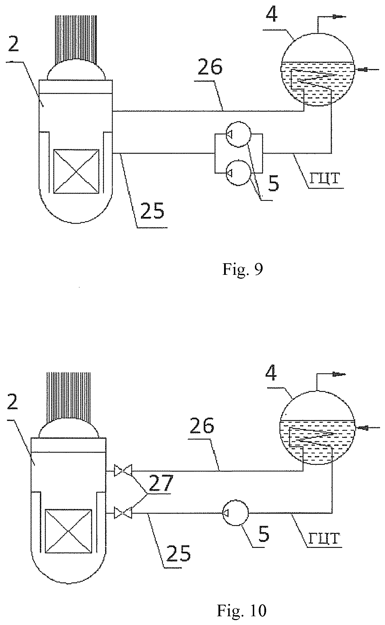

In another arrangement of the reactor plant, two reactor coolant pumps 5 of lower capacity may be installed in parallel on the cold leg 25 of the main circulation pipeline as shown in Fig. 9. This will allow to reduce the pump dimensions, increasing the reliability margin and improving reactor plant technical and economic performance.

In addition, provision may be made for gate valves 27 on the main circulation pipeline legs 25 and 26 of the reactor plant as shown in Fig. 10. This would allow to enhance the operation reliability of the reactor plant making it possible to isolate the steam generator from the reactor and perform repairs without shutting down the reactor plant.

The reactor plant functions as follows.

The process flow diagram of the reactor plant is double-circuit. The primary circuit is radioactive and located in a containment 1, comprising a VVER water-cooled water-moderated power reactor 2 and four circulation loops of the MCP 3, through which the primary circuit coolant, pressurized water (160 kgf/cm$^2$), is pumped to a reactor core 2 by means of reactor coolant pumps 5. Water temperature at the reactor inlet is approximately 289 °C, and 322 °C at the outlet. The water heated in the reactor 2 is supplied to steam generators 4 through four MCP pipelines 3. A steam pressurizer 6 maintains the pressure and level of the primary circuit coolant.

The secondary circuit is non-radioactive, consists of an evaporator and a feed water plant, a unit demineralization plant and a turbine generator (not shown). The primary circuit coolant is cooled down in the steam generators 4 transferring heat to the secondary circuit water. The saturated steam produced in the steam generators 4 is supplied to the turbine generator rotating the power generator by steam removal connection pipes 9 and the steam header.

Example.

An NPP with a VVER reactor is constructed. To provide reliable reactor cooldown, the steam generator shall have the following parameters:

- steam generator heat-exchange surface area $H_{hes}$ =6000 m$^2$.

A steam generator with the following parameters has been manufactured for the reactor plant:

- steam capacity per reactor plant steam generator D= 1500 t/h,
- outer diameter of the primary circuit header in the drilled part $D_{head}$ = 1200 mm,
- width of the heat-exchange tube central tunnel $B_1$ = 200 mm,
- width of the heat-exchange tube tunnel opposite to the coolant header $B_2$ =200 mm,
- outer heat-exchange tube diameter d=16 mm,
- spacing between heat-exchange tubes in the horizontal heat-exchange bundle row $S_h$ = 24 mm,
- spacing between heat-exchange tubes in the vertical heat-exchange bundle row $S_v$ = 22 mm,
- number of heat-exchange tubes in the steam generator $N_{tb}$ = 10,000 pcs,
- heat-exchange bundle arrangement identifier k =1 for the in-line arrangement,
- steam generator vessel tube filling height H = 2300 mm,

According to the claimed invention, steam generator pressure vessel inner diameter $D_{vess}$ is selected from the range based on the following ratio:

$$0.148 {\cdot} D + 0.637 {\cdot} \sqrt{0.054 {\cdot} D^2 + 3.142 {\cdot} \frac{N_{tb} {\cdot} S_h {\cdot} S_v}{k}} \le D_{vess} \le 1.827 {\cdot} H,$$

$$2825 \text{ mm} \le D_{vess} \le 4202 \text{ mm}.$$

Distance S between the centerlines of the coolant headers in the transverse direction is selected from a range based on the following ratio:

$$0.4 \le \frac{S}{D_{vess}} \le 0.6 \text{ , then } 1130 \text{ mm} \le S \le 2521 \text{ mm}.$$

Steam generator length Lv (along the inner surfaces of the elliptical bottoms) is selected from a range based on the following ratio:

$$L_{\text{к}} = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

at $90° \leq \alpha \leq 150°$   and $300 \text{ mm} \leq \Delta \leq 1000 \text{ mm}$, then $13,790 \text{ mm} \leq L_v \leq 16,807 \text{ mm}$.

and $300 \text{ mm} \leq \Delta \leq 10000 \text{ mm}$, then $13,790 \text{ mm} \leq L_v \leq 16,807 \text{ mm}$.

If steam generator pressure vessel inner diameter $D_{vess}$ is less than 2825 mm, then it will not be possible to securely mount heat-exchange tubes in such seam generator by means of spacing elements, therefore, there will be no space left for the same, and thus the steam generator design reliability requirement will not be met. A steam generator pressure vessel with an inner diameter exceeding 4202 mm is uneconomical to install in a reactor plant as it increases its specific amount of metal per structure, while the water content of the steam generated and plant efficiency are not improved, but the containment size is increased. The steam generator contains the same heat-exchange surface, therefore, the coolant remains within the same temperature range in the reactor plant MCP. As a result, the critical heat flux ratio does not increase in the core.

Steam generator length Lv (along the inner surfaces of the elliptical bottoms) of less than 13,790 mm does not provide the best performance of bending and fastening of U-shaped tubes in a bundle as the tube bending angle exceeds 150°, and the distance between the outer tubes of the bundle and the vessel bottom is less than 300 mm, which prevents installation of a bundle support.

Steam generator length Lv (along the inner surfaces of the elliptical bottoms) of more than 16,807 mm is not reasonable, as an increase in the steam generator pressure vessel length does not improve steam quality indicators, such as dehydration, and the heat-exchange surface area remains constant at 6000 m$^2$ due to the fact that the steam generator length is not increased due to a greater number of heat-exchange tubes or heat-exchange surface area, but by closer bending angles and excessive gaps between the heat-exchange tube bundle and the steam generator bottoms. This results in an increased specific amount of metal per structure of the reactor plant steam generator without an increase in the critical heat flux ratio in the core or improvement of steam water content and pressure parameters in the steam generator, while the containment size is increased without any positive technical effect for reactor plant operation.

If distance S between the centerlines of the coolant headers in the transverse direction of at least 1130 mm is selected, the central part of the heat-exchange bundle of the steam generator will not be filled with tubes. As to fasten a heat-exchange tube in a hole in the primary circuit coolant side wall, its end shall have a straight section with a length exceeding the depth of such hole. If the condition is not fulfilled, then such heat-exchange tube cannot be placed and fastened in the coolant header side wall hole. Therefore, if the central part of the steam generator heat-exchange bundle is not filled with tubes, it will not allow to provide the specified number of heat-exchange tubes in the steam generator or the specified dimensions of the heat-exchange surface, which will compromise the performance indicators of the reactor plant.

If distance S between the centerlines of the coolant headers in the transverse direction of more than 2521 mm is selected, then it will not be possible to install the heat-exchange tube bundle near the steam generator pressure vessel side wall, which will not allow to provide the specified heat-exchange surface area and performance indicators of the reactor plant.

## Claims

1. A horizontal steam generator for a reactor plant with a water-cooled water-moderated power reactor comprising a cylindrical pressure vessel equipped at least with one feed water supply connection pipe and one steam removal connection pipe, and two elliptical bottoms, internals, primary circuit coolant inlet and outlet headers connected to a heat-exchange tube bundle forming a steam-generator heat-exchange surface, the heat-exchange tube bundle being divided into banks by intertubular tunnels, wherein distance S between the primary circuit coolant header centerlines in the transverse direction of the steam generator pressure vessel has been selected based on the following ratio: $0.4 \leq \dfrac{S}{D_{\text{vess}}} \leq 0.6$ , where $D_{vess}$ is the steam generator pressure vessel inner diameter, and steam generator length $L_v$ along the inner surfaces of the elliptical bottoms has been selected based on the following ratio:

$$L_{\text{к}} = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

where: $D_{head}$ is the coolant header outer diameter in the drilled part, mm,
$\alpha$ is the heat-exchange tube central bend angle, deg.,
$B_1$ is the width of the heat-exchange tube central intertubular tunnel, mm,
$B_2$ is the width of the heat-exchange tube intertubular tunnel opposite to the coolant header, mm,
$S_{head}$ is the heat-exchange tube circumferential spacing on the outer surface of the coolant header, mm,
Sh is the spacing between heat-exchange tubes in the horizontal heat-exchange bundle row, mm,
$H_{hes}$ is the steam generator heat-exchange surface area, m$^2$,
$N_{tb}$ is the number of steam generator heat-exchange tubes, pcs.,
d is the outer heat-exchange tube diameter, mm,
$\Delta$ is the distance from the outer heat-exchange bundle tube to the steam generator bottom inner surface along the longitudinal steam generator axis, in mm, wherein central heat-exchange tube bend angle $\alpha$ and distance $\Delta$ have been selected from the following ranges: $90° \leq \alpha \leq 150°$ and $300 \leq \Delta \leq 1000$ mm.

2. A steam generator according to claim 1, wherein the heat-exchange tube bundle is filled with heat-exchange tubes from bottom upwards evenly with vertical gaps between adjacent tubes not exceeding the vertical spacing of tubes in the bundle.

3. A steam generator according to claim 1, wherein the vertical intertubular tunnel width is between 100 mm and 250 mm.

4. A steam generator according to claim 1, wherein the heat-exchange tube bend at the point of connection to the coolant header shall have a radius of at least 60 mm and, preferably, at least 100 mm.

5. A steam generator according to claim 1, wherein the coolant header drilling area shall exceed the area of the holes for connection of heat-exchange tubes to the same by at least 20 %.

6. A reactor plant with a water-cooled water-moderated power reactor and a horizontal seam generator, including a nuclear reactor with four circulation loops, each comprising a steam generator with a horizontal bundle of heat-exchange tubes divided into banks by means of intertubular tunnels and connected to primary circuit coolant headers inside a cylindrical pressure vessel with elliptical bottoms, a reactor coolant pump, and a primary circuit coolant main circulation pipeline, wherein pressure vessel bore $D_{vess}$, distance S between the centerlines of the primary circuit coolant headers in the transverse direction and steam generator length $L_v$ along the inner surfaces of the elliptical bottoms have been respectively selected based on the following ratios:

$$0.148 \cdot D + 0.637 \cdot \sqrt{0.054 \cdot D^2 + 3.142 \cdot \frac{N_{tb} \cdot S_h \cdot S_v}{k}} \leq D_{vess} \leq 1.827 \cdot H,$$

$$0.4 \leq \frac{S}{D_{vess}} \leq 0.6 ,$$

$$L_к = D_{head} + 2 \cdot \left[ \left( ctg\left(\frac{\alpha}{2}\right) - \frac{1}{\sin\left(\frac{\alpha}{2}\right)} \right) \cdot \left( \frac{B_1}{2} + B_2 + \left( \frac{\pi \cdot D_{head}}{4 \cdot S_{head}} - 1 \right) \cdot S_h \right) + \left( \frac{\pi \cdot D_{head}}{4 \cdot S_{head}} - 1 \right) \cdot S_h \cdot \frac{1}{\sin\left(\frac{\alpha}{2}\right)} + \Delta \right] + \frac{H_{hes} \cdot 10^6}{\pi \cdot d \cdot N_{tb}},$$

where: D is the rated steam generator capacity, t/h,
$N_{tb}$ is the number of steam generator vessel heat-exchange tubes, pcs.,
Sv, Sh is the spacing between heat-exchange tubes in vertical and horizontal rows of heat-exchange bundle, respectively, mm,
k is the arrangement identifier of heat-exchange tube bundle in a bank (k=1 for in-line arrangement and k=2 for staggered arrangement),
H is the steam generator vessel tube filling height, mm,
$D_{head}$ is the primary circuit header outer diameter in the drilled area, mm,
$\alpha$ is the heat-exchange tube central bend angle, deg.,
$B_1$ is the width of the heat-exchange tube central tunnel, mm,
$B_2$ is the width of the heat-exchange tube tunnel opposite to the coolant header, mm,
$S_{head}$ is the heat-exchange tube circumferential spacing on the outer surface of the coolant header, mm,
$H_{hes}$ is the steam generator heat-exchange surface area, m$^2$,

d is the outer heat-exchange tube diameter, mm,

$\Delta$ is the distance from the outer heat-exchange bundle tube to the steam generator bottom inner surface along the longitudinal steam generator axis, in mm, wherein heat-exchange tube bend angle $\alpha$ and distance $\Delta$ have been selected from the following ranges:

$$90° \leq \alpha \leq 150° \quad \text{and} \quad 300 \text{ mm} \leq \Delta \leq 1000 \text{ mm}.$$

7. A reactor plant according to claim 6, wherein the steam generator and the reactor coolant pump are connected to the reactor building walls by hydraulic snubbers.

8. A reactor plant according to claim 6, wherein the reactor coolant pump is installed downstream of the steam generator along the primary circuit coolant flow in the circulation loop.

9. A reactor plant according to claim 6, wherein the reactor coolant pump is installed both on the hot leg and the cold leg of the main circulation pipeline in the circulation loop.

10. A reactor plant according to claim 6, wherein two reactor coolant pumps are installed in parallel on the cold leg of the main circulation pipeline.

11. A reactor plant according to claim 6, wherein gate valves are installed on the main circulation pipeline legs.

Fig. 1

Fig. 2

Fig. 3

Fig. 4

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9320386 A
- RU 100590
- US 5331677 A
- RU 143541
- RU 7272014